## Europäisches Patentamt
## European Patent Office
## Office européen des brevets

(11) Veröffentlichungsnummer: **0 201 516**
**B1**

(12) # EUROPÄISCHE PATENTSCHRIFT

(45) Veröffentlichungstag der Patentschrift:
**28.12.88**

(51) Int. Cl.⁴: **B 65 G 17/24**

(21) Anmeldenummer: **85904793.8**

(22) Anmeldetag: **11.09.85**

(86) Internationale Anmeldenummer:
**PCT/DE 85/00318**

(87) Internationale Veröffentlichungsnummer:
**WO 86/02622 (09.05.86 Gazette 86/10)**

(54) **KETTENFÖRDERER FÜR WERKSTÜCKE UND WERKSTÜCKTRÄGER.**

(30) Priorität: **23.10.84 DE 3438786**

(43) Veröffentlichungstag der Anmeldung:
**20.11.86 Patentblatt 86/47**

(45) Bekanntmachung des Hinweises auf die Patenterteilung:
**28.12.88 Patentblatt 88/52**

(84) Benannte Vertragsstaaten:
**CH DE FR GB LI**

(56) Entgegenhaltungen:
**DE-U- 8 227 706**

(73) Patentinhaber: **ROBERT BOSCH GMBH, Postfach 50,
D-7000 Stuttgart 1 (DE)**

(72) Erfinder: **LEISNER, Ernst, Wettertalstr. 4,
D-7257 Ditzingen (DE)**
Erfinder: **MAIER, Gernot, Im Geiger 81,
D-7000 Stuttgart 50 (DE)**
Erfinder: **ROTHFUSS, Peter, J.-S.-Bach-Str. 6/1,
D-7257 Ditzingen (DE)**

## Beschreibung

Die Erfindung geht aus von einem Kettenförderer nach der Gattung des Hauptanspruchs. Kettenförderer dieser Gattung (DE-U-8227706) sind für den Transport schwerer Werkstücke geeignet und haben den Vorteil, dass die Kette bei angehaltenem Werkstück bzw. Werkstückträger weiterlaufen kann. Die Staurollen wälzen sich dabei an der Auflagefläche des Werkstücks bzw. Werkstückträgers ab, so dass bei der Relativbewegung der Teile nur rollende Reibung auftritt und für das Weiterbewegen der Kette nur eine verhältnismässig geringe Antriebsleitung erforderlich ist. Die Einsatzelemente verhindern, dass in die zwischen den Staurollen gebildeten keilartigen Freiräumen Späne, Schrauben und ähnliche Kleinteile fallen, welche die Werkstücke bzw. Werkstückträger beschädigen oder gar Betriebsstörungen hervorrufen können. Nachteilig ist jedoch, dass die Einsatzelemente mit Ausnahme des Bereichs, der den Gelenkbolzen klemmend umgreift, als in sich starre Füllstücke ausgebildet sind, so dass ein Abbiegen der Staurollenkette «über den Rücken» und damit eine Führung über gegensinnig laufende Umlenkrollen nicht möglich ist.

Der Erfindung liegt die Aufgabe zugrunde, einen Kettenförderer der eingangs genannten Art so weiterzubilden, dass die Staurollenkette ohne Behinderung durch die Freiräume zwischen den Staurollen abdeckenden Einsatzelemente nach beiden Richtungen abgebogen werden kann.

Bei der erfindungsgemässen Anordnung nach den kennzeichnenden Merkmalen des Hauptanspruchs sind die Einsatzelemente so in sich verformbar, dass sie die beim Abbiegen der Staurollenkette «über den Rücken» eintretenden Verkürzungen der Staurollenabstände in den von ihnen abgedeckten Bereichen aufzunehmen vermögen und danach beim Strecken der Staurollenkette dank der verlängerten Ausführung ihrer Schenkel durch Eigenfederung selbsttätig in die vorschriftsmässige Ausgangsstellung zurückkehren.

Eine vorteilhafte Weiterbildung der Anordnung nach dem Hauptanspruch ergibt sich, wenn ein Federschenkel am freien Ende mit einem abgebogenen Randabschnitt versehen ist, der ein vollständiges Ausrasten des Einsatzelementes im Krümmungsbereich der Kette verhindert. Die Einsatzelemente können einfach durch einstückige Federblechbügel gebildet sein.

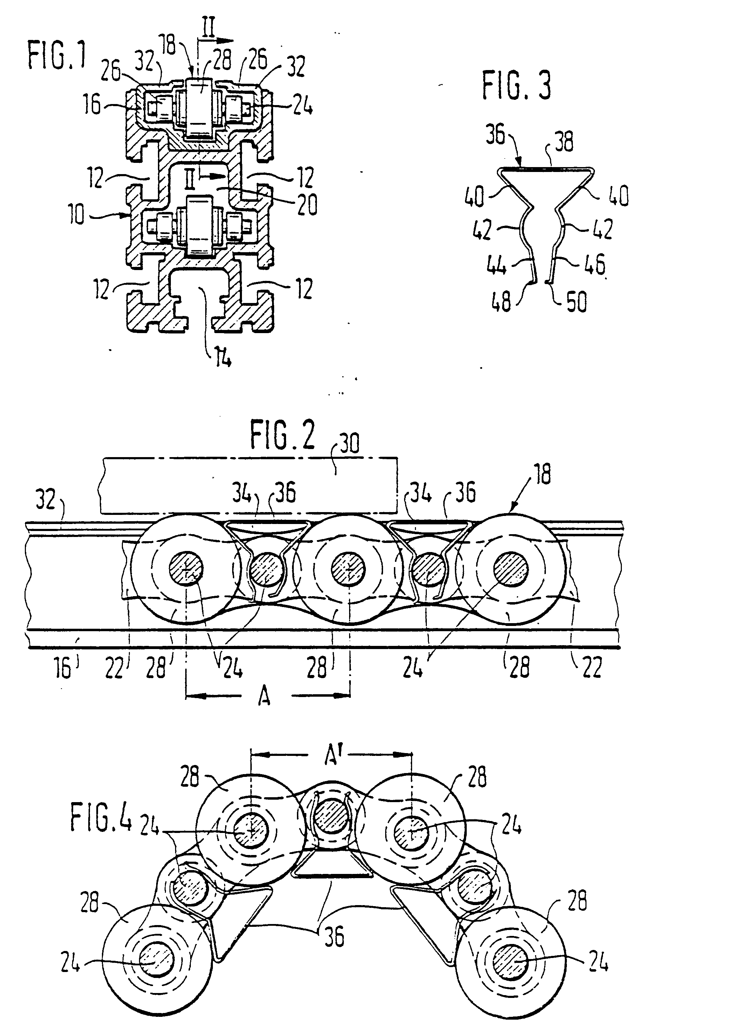

Ein Ausführungsbeispiel der Erfindung ist in der Zeichnung dargestellt und in der nachfolgenden Beschreibung näher erläutert. Es zeigen Figur 1 einen Querschnitt durch einen erfindungsgemässen Kettenförderer für flexible Montagesysteme, Figur 2 einen Teilschnitt nach der Linie II-II in Figur 1 in vergrössertem Massstab, Figur 3 ein Einzelteil der Staurollenkette nach Figur 2 und Figur 4 die Staurollenkette nach Figur 2 in einem Krümmungsbereich.

Der Kettenförderer hat ein Tragprofil 10, welches mit Längsnuten 12, 14 zum Einsetzen von Verbindungsmitteln für weitere Tragprofile versehen ist, die zusammen das Gestell eines Transfersystems bilden. In das Tragprofil 10 ist von oben ein Kettenführungsprofil 16 eingesetzt, in welchem der fördernde Strang einer endlosen Staurollenkette 18 geführt und abgestützt ist. Diese ist in bekannter Weise über zwei Umlenkrollen an den Enden der Förderstrecke und über zwei Spannrollen geführt, wobei die eine Spannrolle die Kette anders als die Umlenkrollen und die andere Spannrolle umlenkt und krümmt. Der von der einen Umlenkrolle zu der die Kette 18 gegensinnig krümmenden Spannrolle führende Kettenstrang verläuft in einem Hohlraum 20 des Tragprofils 10.

Die Kette 18 ist zu beiden Seiten ihrer Längsmittelebene mit laschenförmigen Kettengliedern 22 versehen, welche durch Gelenkbolzen miteinander verbunden sind. Die Endbereiche der Gelenkbolzen 24 sind mit Laufrollen 26 versehen, welche auf Laufflächen des Kettenführungsprofils 16 aufliegen. Jeder zweite Gelenkbolzen 24 trägt frei drehbar zwischen den Kettengliedern eine Staurolle 28, die einen Auflagepunkt für einen in Figur 2 angedeuteten Werkstückträger 30 bildet. Das Kettenführungsprofil 16 ist auf seiner Kopfseite mit Abdeckleisten 32 versehen, die bis auf einen geringen Spalt an die Staurollen 28 heranreichen. Die Abdeckleisten 32 liegen etwas unterhalb der die Staurollen 28 tangierenden Transportebenen, so dass das Transportgut ungehindert passieren kann.

Zwischen den Staurollen 28 sind keilartige Freiräume 34 in der Kette 18 gebildet, die an der das Transportgut tragenden Kettenseite erfindungsgemäss durch Einsatzelemente 36 abgedeckt sind, welche von den zwischen den Staurollen 28 liegenden Gelenkbolzen 24 getragen sind. Die Einsatzelemente 36 sind durch einstückige Federblechbügel gebildet, welche auf die zugeordneten Gelenkbolzen 24 aufgerastet sind. Jedes Einsatzelement 36 hat einen etwa ebenen Steg 38 (Figur 3) und zwei federnde Schenkel, welche je einen ersten, etwa tangential zur benachbarten Staurolle 28 verlaufenden Schenkelabschnitt 40 und einen daran anschliessenden, den Gelenkbolzen 24 angepassten zweiten Schenkelabschnitt 42 aufweisen. Die freien Schenkelenden 44 und 46 sind über die Druckflächen an den Schenkelabschnitten 42 hinaus verlängert und schräg gegeneinander gestellt. Das Schenkelende 44 ist mit einer das Aufstecken des Einsatzelementes 36 auf den Gelenkbolzen 24 erleichternden, nach aussen abgebogenen Rand 48 versehen, wogegen das andere Schenkelende 46 einen nach innen gerichteten Rand 50 hat, der als Sicherung gegen ungewolltes Lösen des Einsatzelementes 36 dient.

Bei der Montage werden die Einsatzelemente 36 einfach auf die freien Gelenkbolzen 24 aufgedrückt, bis sie mit den Gelenkbolzen verrasten. Die Freiräume sind dann nach aussen abgedeckt, so dass keine Späne, Schrauben oder sonstige Kleinteile in sie hineinfallen können. Die Einsatzelemente 36 werden durch ihre Schenkelabschnitte 40 zwischen den Staurollen 28 zentriert gehalten. Beim Krümmen der Kette 18 gemäss Figur 4 werden die normalen Staurollenabstände A auf die Abstände A' verkleinert. Dadurch werden die Einsatzelemente 36 axial zusammen- und ein Stück weit aus ihrer Raststellung herausgedrückt. Wenn der gekrümmte Kettenabschnitt wieder in die Strecklage übergeht, werden die Einsatzelemente 36 durch die rückführende Kraft der schräg gestellten Schenkelenden 44, 46 in die Raststellung zurückgeschoben.

## Patentansprüche

1. Kettenförderer für Werkstücke und Werkstückträger, mit einem Kettenführungsprofil und einer Staurollenkette, die an jedem zweiten Gliedgelenk mit einer auf dem Gelenkbolzen drehbar gelagerten Staurolle (28) versehen ist, welche über das Kettenführungsprofil nach oben hervorsteht und einen Auflagepunkt für das Transportgut bildet, wobei die zwischen den Staurollen (28) gebildeten keilartigen Freiräume (34) in der Kette an der das Transportgut tragenden Kettenseite durch Einsatzelemente (36) abgedeckt sind, welche auf die zwischen den Staurollen (28) liegenden Gelenkbolzen (24) aufgerastet sind, dadurch gekennzeichnet, dass die Einsatzelemente (36) als Federelemente mit einem mindestens annähernd ebenen Steg (38) und zwei gegeneinander federnden Schenkeln ausgebildet sind, welche je einen etwa tangential zur benachbarten Staurolle (28) verlaufenden Schenkelabschnitt (40) und einen daran anschliessenden, zum rastenden Umfassen des Gelenkbolzens (24) dienenden und dessen Durchmesser angepassten Schenkelabschnitt (42) aufweisen, und dass die freien Enden (44, 46) der federnden Schenkel über die am Gelenkbolzen (24) anliegende Druckfläche hinaus verlängert und so geformt sind, dass sie eine das Federelement (36) in die Raststellung zurückführende Rückstellkraft ausüben, wenn bei Krümmung der Kette (18) und dadurch bedingter Verkürzung der Staurollenabstände (a) die Staurollen (28) das Einsatzelement (36) ein Stück weit aus der Raststellung herausdrücken.

2. Kettenförderer nach Anspruch 1, dadurch gekennzeichnet, dass ein Federschenkel (46) am freien Ende mit einem abgebogenen Randabschnitt versehen ist, der ein vollständiges Ausrasten des Einsatzelementes (36) im Krümmungsbereich der Kette (18) verhindert.

3. Kettenförderer nach Anspruch 1 oder 2, dadurch gekennzeichnet, dass die Einsatzelemente (36) durch einstückige Federblechbügel gebildet sind.

## Claims

1. Chain conveyor for workpieces and workpiece holders, having a chaine-guide profile and a retarding-roller chain which is provided at every second link joint with a retarding roller (28) which is rotatably mounted on the joint pin, protrudes upwards beyond the chain-guide profile and forms a bearing point for the material to be transported, the wedge-like clearance spaces (34) in the chain which are formed between the retarding rollers (28) being covered by insert elements (36) at the chain side supporting the material to be transported, which insert elements (36) are snapped onto the joint pins (24) lying between the retarding rollers (28), characterized in that the insert elements (36) are designed as spring elements having a web (38), at least approximately flat, and two mutually elastic legs, each of which has a leg section (40), running approximately tangentially to the adjacent retarding roller (28), and an adjoining leg section (42) serving to surround the joint pin (24) in a locking manner and adapted to the diameter of the latter, and that the free ends (44, 46) of the elastic legs are extended beyond the pressure surface bearing against the joint pin (24) and are shaped in such a way that they exert a restoring force returning the spring element (36) into the locking position when the retarding rollers (28) press the insert element (36) by a short distance out of the locking position when the chain (18) curves and the retarding-roller spacings (A) are thereby shortened.

2. Chain conveyor according to claim 1, characterized in that one spring leg (46), at the free end, is provided with a bent edge section (50) which prevents the insert element (38) from completely disengaging in the curved area of the chain (18).

3. Chain conveyor according to claim 1 or 2, characterized in that the insert elements (34) are formed by one-piece spring-plate stirrups.

## Revendications

1. Transporteur à chaînes pour pièces à usiner et support de pièces à usiner comportant un profil de guidage de chaîne et une chaîne à galets munie sur chaque second maillon d'un galet de support (28) monté à rotation sur l'axe d'articulation, galet qui vient en saillie au-dessus du profilé de guidage de la chaîne et forme un point d'appui pour le produit à transporter, les intervalles libres (34) en forme de coins existant entre les galets (28) dans la chaîne étant recouverts du côté de la chaîne portant les produits à transporter par des éléments (36) qui sont encliquetés sur les axes d'articulation (24) situés entre les galets (28), transporteur caractérisé en ce que les éléments (36) sont des éléments élastiques ayant une âme (38) au moins pratiquement plane et deux branches élastiques l'une par rapport à l'autre, avec un segment de branche (40) respectif sensiblement tangent au galet (28) voisin suivi par un segment de branche (42) servant à enserrer par encliquetage l'axe d'articulation (24) en étant adapté à son diamètre et en ce que l'extrémité libre (44, 46) des branches élastiques est prolongée au-delà de la surface de pression appliquée contre l'axe d'articulation (24) en étant formée pour exercer une force de rappel pour rappeler l'element (36) en position de repos si lorsque la chaîne (18) est courbée et que l'intervalle (A) entre les galets (28) est raccourci, l'élément (36) est poussé hors de la position de repos.

2. Transporteur à chaînes selon la revendication 1, caractérisé en ce que l'une des branches (46) comporte à son extrémité libre un segment (50) recourbé qui interdit tout dégagement complet de l'élément (36) dans la zone de courbure de la chaîne (18).

3. Transporteur à chaînes selon la revendication 1 ou 2, caractérisé en ce que les éléments (36) sont des étriers en tôle élastique en une seule pièce.

FIG.1

FIG.3

FIG.2

FIG.4